# EUROPEAN PATENT SPECIFICATION

(11) **EP 4 447 151 B1**
(45) Date of publication and mention of the grant of the patent: **11.11.2026**
(21) Application number: 23865836.3
(22) Date of filing: 13.09.2023
(51) Int. Cl.: H01M 4/1393, G01B 21/22, H01F 7/02, H01M 4/02, H01M 4/04, H01M 4/133, H01M 4/583

(54) **MAGNETISM ALIGNMENT APPARATUS FOR NEGATIVE ELECTRODES AND METHOD FOR MANUFACTURING NEGATIVE ELECTRODES USING SAME**
MAGNETISMUS-AUSRICHTUNGSVORRICHTUNG FÜR NEGATIVE ELEKTRODEN UND VERFAHREN ZUR HERSTELLUNG VON NEGATIVEN ELEKTRODEN DAMIT
APPAREIL D'ALIGNEMENT DE MAGNÉTISME POUR ÉLECTRODES NÉGATIVES ET PROCÉDÉ DE FABRICATION D'ÉLECTRODES NÉGATIVES L'UTILISANT

(30) Priority: 15.09.2022 KR 20220116176
(43) Date of publication of application: 16.10.2024
(73) Proprietor: LG Energy Solution, Ltd., Seoul 07335 (KR)
(72) Inventor: YOON, Jong Su, Daejeon 34122 (KR); LEE, Taek Soo, Daejeon 34122 (KR); CHO, Jin Ho, Daejeon 34122 (KR); JEON, Shin Wook, Daejeon 34122 (KR); KIM, Young Gon, Daejeon 34122 (KR)
(74) Representative: Plasseraud IP
(86) International application number: PCT/KR2023/013695
(87) International publication number: WO 2024/058539

(56) References cited:
- WO-A1-2021/261674
- JP-A- 2000 057 568
- JP-A- 2013 143 304
- JP-B2- 5 892 393
- KR-A- 20060 051 305
- KR-A- 20190 049 803
- KR-A- 20210 130 062
- US-A1- 2014 072 848

## Description

This application claims the benefit of priority based on Korean Patent Application No. 10-2022-0116176.

### [Technical Field]

The present invention relates to a magnetic alignment device capable of uniformly aligning a negative electrode active layer in the manufacture of a negative electrode, and a method for manufacturing a negative electrode using the same.

### [Background Art]

Recently, secondary batteries have been widely applied in small devices such as portable electronics, as well as in medium and large devices such as battery packs or power storage in hybrid vehicles or electric vehicles.

Such a secondary battery refers to a power generation element that can be charged and discharged by a laminated structure of a positive electrode, a separator, and a negative electrode. Generally, the positive electrode includes lithium metal oxide as the positive electrode active material and the negative electrode includes a carbon-based negative electrode active material such as graphite, so that lithium ions discharged from the positive electrode are absorbed into the carbon-based negative electrode active material of the negative electrode during charging, and lithium ions contained in the carbon-based negative electrode active material are absorbed into the lithium metal oxide of the positive electrode during discharging, and charging and discharging are repeated.

In this case, the negative electrode active material used for the negative electrode is graphite material such as natural graphite, etc. This graphite has a layered structure and is formed by laminating a number of layers that are spread out in a planar shape with carbon atoms forming a network structure. During charging, lithium ions intercalate to the edges of these graphite layers (where the layers overlap) and diffuse between the layers. Also, during discharging, lithium ions can be deintercalated and released from the edge faces of the layers. In addition, since graphite has a lower electrical resistance in the plane direction of the layer than in the laminated direction of the layer, a conductive path for diverted electrons is formed along thein plane direction of the layer.

In this regard, a technology for orienting the graphite contained in the negative electrode in a magnetic field has been proposed to improve the charging performance of the negative electrode in a conventional lithium secondary battery using graphite. Specifically, the graphite is oriented so that the (0,0,2) crystal face of the graphite is almost vertical to the negative electrode current collector in a magnetic field during the formation of the negative electrode and has a configuration that fixes it. In this case, since the edge of the graphite layer faces the positive active layer, the insertion and removal of lithium ions can be carried out smoothly, and the conductive path of electrons can be shortened to improve the electronic conductivity of the negative electrode, thereby improving the charging performance of the battery.

However, it is possible to induce the orientation of graphite by applying a magnetic field to the undried negative electrode slurry, but the conditions of the applied magnetic field may vary depending on various variables such as the loading amount and thickness of the negative electrode slurry containing graphite, and it is difficult to reflect these variables in real time during actual negative electrode manufacturing, so it is difficult to realize the uniform orientation of graphite.

In addition, various models of negative electrodes with different specifications are manufactured in a single negative electrode manufacturing device, and it is not easy to control the magnetic field application means, i.e., permanent magnets, etc., provided in the manufacturing device according to the specifications of the negative electrode to be manufactured.

Therefore, there is a need for a technology that can easily control magnetic field application means according to the negative electrode manufacturing conditions such as the size of the negative electrode and/or the loading amount of the negative electrode slurry to produce a negative electrode active layer in which carbon-based negative electrode active materials such as graphite with a high degree of alignment are uniformly distributed.

US 2014/072848 A1 discloses a lithium-ion secondary cell and method of manufacturing same.

### [Disclosure]

### [Technical Problem]

An object of the present invention is to provide an alignment device capable of uniformly aligning a carbon-based negative electrode active material within a negative electrode active layer by facilitating adjustment of the strength of a magnetic field applied to the negative electrode slurry during negative electrode manufacturing, and a method of manufacturing a negative electrode using the device.

### [Technical Solution]

To solve the problem described above, the present invention provides, in one embodiment, a magnetic alignment device for a negative electrode in which a negative electrode slurry including a carbon-based negative electrode active material is applied to a negative electrode sheet applied on a negative electrode current collector to orient a carbon-based negative electrode active material by applying a magnetic force, including:
a first magnet part and a second magnet part arranged at an upper portion and a lower portion of the traveling electrode sheet, respectively,
an alignment measuring part disposed downstream of the first magnet part and the second magnet part relative to the traveling direction of the electrode sheet to measure the alignment of the carbon-based negative electrode active material to the negative electrode current collector, and
a control part for adjusting a separation distance between the first magnet part and the second magnet part according to a degree of alignment of a carbon-based negative electrode active material measured at an alignment measuring part,
wherein the first magnet part and the second magnet part each include a plurality of unit magnets disposed in the width direction of the negative electrode slurry, wherein the unit magnets in one of the first magnet part and the second magnet part individually perform a lifting movement in the vertical direction with respect to the traveling electrode sheet, so that the separation distance from the opposing unit magnet in the other of the first magnet part and the second magnet part centered on the electrode sheet is adjusted.

**In** this case, the alignment measuring part may include at least two non-contact gauges along the width direction of the traveling electrode sheet, and as the non-contact gauge, one or more of the following may be included: spectrophotometer, chromatic colorimeter, photometer, infrared spectroscopy (FT-IR), nuclear magnetic resonance spectroscopy (NMR), X-ray diffraction spectroscopy (XRD), near-field X-ray fluorescence spectroscopy (NEXAFS), and X-ray photoelectron spectroscopy (XPS).

Further, the control part calculates an alignment deviation from the alignment of two or more carbon-based negative electrode active materials measured along the width direction of the traveling electrode sheet, and may adjust the separation distance between the unit magnets of the first magnet part and the unit magnets of the second magnet part disposed on a corresponding point according to the calculated alignment deviation.

To this end, the control part may be provided with a database storing a spacing adjustment value of the unit magnet of the first magnet part and the unit magnet of the second magnet part according to an alignment deviation of the carbon-based negative electrode active material.

Moreover, the first magnet part and the second magnet part may each include a plurality of unit magnets disposed in the width direction of the negative electrode slurry, wherein the unit magnets individually perform a lifting movement in the vertical direction with respect to the traveling electrode sheet, so that the separation distance from the opposing unit magnet centered on the electrode sheet is adjusted.

In addition, each of the unit magnets provided in the first magnet part and the second magnet part may include: a support part individually fixed to each of the unit magnets; and a distance adjustment means connected to the support part and inducing a lifting movement of the support part in a vertical direction with respect to the traveling electrode sheet.

Furthermore, the first magnet part and the second magnet part may include magnets having opposite poles, and their separation distance may be adjusted from 10 mm to 50 mm.

Further, the magnetic alignment device may further include a drying part for drying the negative electrode slurry, in which the carbon-based negative electrode active material is aligned, between the alignment measuring part and the first and second magnet parts.

Further, in one embodiment, the present invention includes,
a method of manufacturing negative electrode.

The method of manufacturing negative electrode comprises,
applying a negative electrode slurry comprising carbon-based negative electrode active material on a negative electrode current collector;
aligning the carbon-based negative electrode active material contained in the negative electrode slurry using a magnetic alignment device according to above-described present invention;
drying the negative electrode slurry in which the carbon-based negative electrode active material is aligned to form a negative electrode active layer; and
measuring an alignment of the carbon-based negative electrode active material contained at two or more points along a width direction of the formed negative electrode active layer, and adjusting the spacing of the first magnet part and the second magnet part provided in the magnetic alignment device to reflect the deviation of the measured alignment.

Here, the spacing of the first magnet part and the second magnet part may be adjusted such that, when measuring the alignment of three points included in an arbitrary area (10 cm across and 10 cm long) on the negative electrode active layer, the average color coordinate deviation (ΔL*, Δa*, Δb*) between each point satisfies at least two of the conditions among ΔL* < 2.0, Δa* < 0.5, and Δb* < 0.5.

Further, the manufactured negative electrode active layer may have an alignment degree of the carbon-based negative electrode active material of 0.1 to 5.0 shown in the following equation 1: [Equation 1] $O . I = {I}_{004} / {I}_{110}$ in Equation 1,
I₀₀₄ represents the area of the peak representing the (0,0,4) crystal face in the X-ray diffraction spectroscopy (XRD) measurement of the negative electrode active layer,
I₁₁₀ represents the area of the peak representing the (1,1,0) crystal face in an X-ray diffraction (XRD) measurement of the negative electrode active layer.

Further, in one embodiment, the present invention provides, a negative electrode for lithium secondary battery including:
a negative electrode current collector; and
a negative electrode active layer provided on at least one side of the negative electrode current collector, and including a carbon-based negative electrode active material, wherein when measuring the color coordinates of any three points included in the unit area, the average color coordinate deviation between each points satisfies at least two conditions among ΔL* < 2.0, Δa* < 0.5, and Δb* < 0.5, and
the negative electrode is manufactured by the negative electrode manufacturing method according to the above-described present invention.

Here, the negative electrode active layer may have an alignment degree of the carbon-based negative electrode active material of 0.1 to 5.0 shown in the following equation 1:
[Equation 1] O.I = I₀₀₄/I₁₁₀ in Equation 1,
I₀₀₄ represents the area of the peak representing the (0,0,4) crystal face in the X-ray diffraction spectroscopy (XRD) measurement of the negative electrode active layer,
I₁₁₀ represents the area of the peak representing the (1,1,0) crystal face in an X-ray diffraction (XRD) measurement of the negative electrode active layer.

### [Advantageous Effects]

The magnetic alignment device according to the present invention can measure the alignment of the negative electrode active layer dried with the carbon-based negative electrode active material aligned in real time, and can easily control the strength of the magnetic field applied to the negative electrode slurry by individually adjusting the spacing distance of the unit magnets comprising the magnet row of the magnet part according to the alignment of the carbon-based negative electrode active material, thus having the advantage of high alignment and uniformity of the carbon-based negative electrode active material.

### [Brief Description of the Drawings]

FIG. 1 is a structural view illustrating a schematic configuration of a magnetic alignment device according to the present invention.
FIG. 2 is an image depicting the alignment of the a-b axis crystal faces of graphite according to whether a magnetic field is applied to the negative electrode slurry during the formation of the negative electrode active layer, wherein (a) the crystal faces of graphite are not aligned because a magnetic field is not applied, and (b) the crystal faces of graphite are aligned because a magnetic field is applied.

### [Detailed Description of the Preferred Embodiments]

The present invention is subject to various modifications and can have many different embodiments, and specific embodiments will be described in detail in the following description.

Throughout this specification, it should be understood that terms such as "include" or "have" are intended to indicate that there is a feature, number, step, operation, component, part, or a combination thereof described on the specification, and they do not exclude in advance the possibility of the presence or addition of one or more other features or numbers, steps, operations, components, parts or combinations thereof.

Further, when a portion such as a layer, a film, an area, a plate, or the like is referred to as being "on" another portion, this includes not only the case in which the portion is "directly on" the another portion but also the case in which still another portion is interposed therebetween. In contrast, when a portion such as a layer, a film, an area, a plate, or the like is referred to as being "below" another portion, this includes not only the case in which the portion is "directly below" the another portion but also the case in which still another portion is interposed therebetween. In addition, to be disposed "on" in the specification of the present invention may include the case disposed at the lower portion as well as the upper portion.

Further, in the present invention, "comprising as a major component" may mean comprising 50 wt.% or more (or 50 vol.% or more), 60 wt.% or more (or 60 vol.% or more), 70 wt.% or more (or 70 vol.% or more), 80 wt.% or more (or 80 vol.% or more), 90 wt.% or more (or 90 vol.% or more), or 95 wt.% or more (or 95 vol.% or more) of the defined component relative to the total weight (or total volume). For example, "comprising graphite as the primary component of the negative electrode active material" may mean comprising at least 50 wt.%, at least 60 wt.%, at least 70 wt.%, at least 80 wt.%, at least 90 wt.%, or at least 95 wt.% graphite based on the total weight of the negative electrode active material, and in some cases may mean that the entire negative electrode active material is composed of graphite and comprises 100% graphite.

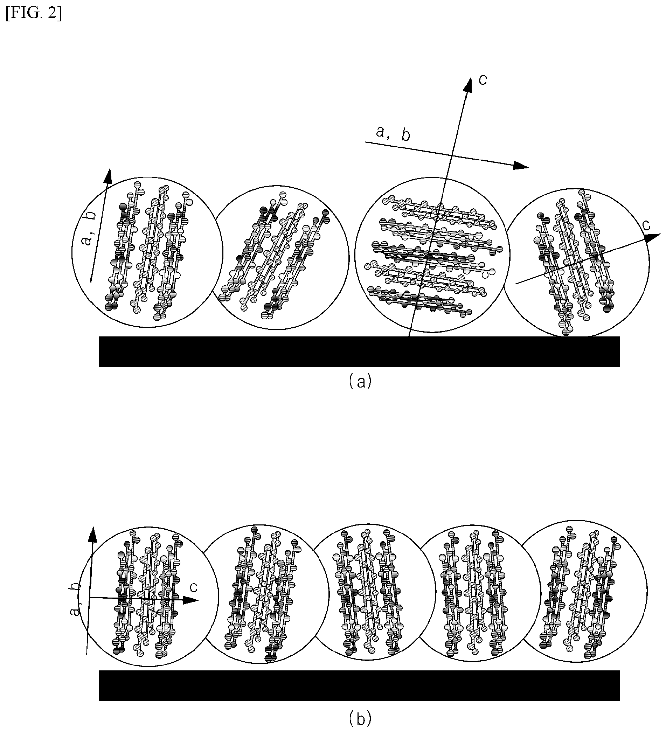

Further, as used herein, "carbon-based negative electrode active material is oriented" or "carbon-based negative electrode active material is aligned" may mean that certain crystal faces (e.g., a-b axis crystal faces of graphite) representing the two-dimensional planar structure of the carbon-based negative electrode active material comprising the negative electrode active material particles are arranged to have a predetermined tilt relative to the surface of the negative electrode current collector, as shown in (b) of FIG. 2. This may be different from the carbon-based negative electrode active material particles themselves being oriented in a predetermined direction only within the negative electrode active layer and not with respect to the negative electrode current collector, as shown in (a) of FIG. 2.

In addition, "highly oriented carbon-based negative electrode active material" may mean that certain crystal faces (e.g., a-b axis crystal faces of graphite) representing the two-dimensional planar structure of the carbon-based negative electrode active material contained in the negative electrode active layer have a high frequency of having a predetermined tilt relative to the negative electrode current collector surface. It may also mean, in some cases, that the crystal faces of the carbon-based negative electrode active material contained in the negative electrode active layer are arranged at a high angle (e.g., a near-vertical angle, greater than 45°; specifically greater than 60°) relative to the negative electrode current collector surface.

In addition, "high alignment of the carbon-based negative electrode active material" means that the "alignment (O.I)" referred to herein has a large value, which may mean that certain crystal faces (e.g., a-b axis crystal faces of graphite) representing the two-dimensional planar structure of the carbon-based negative electrode active material contained in the negative electrode active layer are arranged at a low angle (e.g., less than 45°) relative to the surface of the negative electrode current collector. Conversely, "low alignment of the carbon-based negative electrode active material" may mean that the "degree of alignment (O.I)" has a small value, such that the crystal faces of the carbon-based negative electrode active material contained in the negative electrode active layer are arranged at a high angle (e.g., an angle close to vertical, greater than 45°; specifically greater than 60°) relative to the surface of the negative electrode current collector.

Moreover, as used herein, "average particle diameter (D₅₀)" means the particle diameter at which the sum value is 50% in the particle diameter distribution of the particles, which is also referred to as the median diameter.

Hereinafter, the present invention will be described in more detail.

### Magnetic alignment device of negative electrode

**In** one embodiment, the present invention provides,
a magnetic alignment device for a negative electrode in which a negative electrode slurry including a carbon-based negative electrode active material is applied to a negative electrode sheet applied on a negative electrode current collector to orient a carbon-based negative electrode active material by applying a magnetic force, including:
a first magnet part and a second magnet part arranged at an upper portion and a lower portion of the traveling electrode sheet, respectively;
an alignment measuring part disposed downstream of the first magnet part and the second magnet part relative to the traveling direction of the electrode sheet to measure the alignment of the carbon-based negative electrode active material to the negative electrode current collector; and
a control part for adjusting a separation distance between the first magnet part and the second magnet part according to a degree of alignment of a carbon-based negative electrode active material measured at an alignment measuring part,
wherein the first magnet part and the second magnet part each include a plurality of unit magnets disposed in the width direction of the negative electrode slurry, wherein the unit magnets individually perform a lifting movement in the vertical direction with respect to the traveling electrode sheet, so that the separation distance from the opposing unit magnet centered on the electrode sheet is adjusted.

The magnetic alignment device of a negative electrode according to the present invention refers to a device applied in the manufacture of a negative electrode used in a secondary battery. The magnetic alignment device is capable of aligning the carbon-based negative electrode active material contained in the negative electrode slurry in a direction perpendicular to the negative electrode current collector by applying a magnetic field to a surface of the negative electrode current collector to which the negative electrode slurry containing the carbon-based negative electrode active material is applied, that is, to the surface of the negative electrode slurry. Here, the magnetic alignment device dries the negative electrode slurry containing the aligned carbon-based negative electrode active material and then measures the alignment of the carbon-based negative electrode active material contained in the dried negative electrode active layer formed. Accordingly, the magnetic alignment device can realize uniform alignment of the carbon-based negative electrode active material contained in the negative electrode slurry, and the negative electrode thus prepared can exhibit the effect of increasing the mobility of the lithium ions and decreasing the resistance during charging and discharging of the battery, thereby improving the charging and discharging performance.

In this case, being aligned in a perpendicular direction to the negative electrode current collector means that the crystal faces of the carbon-based negative electrode active material are aligned. Specifically, "the carbon-based negative electrode active material is vertically aligned with the negative electrode current collector" may mean that the crystal faces of the carbon-based negative electrode active material comprising the spherical particles, specifically the crystal faces of graphite, which represent the planar direction of graphite having a two-dimensional structure, are arranged vertically aligned with the surface of the negative electrode current collector. In this case, the planar direction of the graphite may have an average tilt of 60 to 120° with respect to the negative electrode current collector, preferably 70 to 110°; or 80 to 100°.

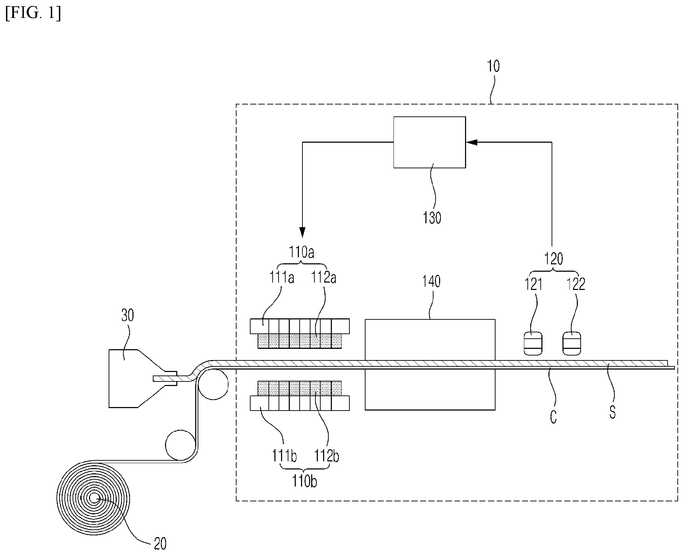

To achieve this, the magnetic alignment device 10 according to the present invention includes a first magnet part 110a and a second magnet part 110b arranged at the upper and lower parts, respectively, of the traveling electrode sheet, i.e., the negative electrode current collector C on which the negative electrode slurry S is applied, as shown in FIG. 1; an alignment measuring part 120 arranged downstream of the first magnet part 110a and/or the second magnet part 110b relative to the traveling direction of the electrode sheet and measuring the alignment of the carbon-based negative electrode active material to the negative electrode current collector; and a control part 130 that adjusts the separation distance between the first magnet part 110a and the second magnet part 110b according to the alignment of the carbon-based negative electrode active material measured by the alignment measuring part.

In the magnetic alignment device 10, the first magnet part 110a and the second magnet part 110b are disposed at the upper and lower portions of the traveling electrode sheet, respectively, to play a role in applying a magnetic field to the surface of the negative electrode slurry S.

Here, the first magnet part 110a and second magnet part 110b may each include a plurality of unit magnets along the width direction of the negative electrode slurry for applying a magnetic field to the surface of the negative electrode slurry S, and may include means for adjusting a spacing, i.e., a separation distance, between the plurality of unit magnets by performing a lifting movement of the plurality of unit magnets at the upper and lower portions of the negative electrode slurry, respectively. Specifically, the first magnet part 110a and second magnet part 110b may include a first magnet row 112a and a second magnet row 112b, respectively, in which a plurality of unit magnets are arranged along the width direction of the traveling negative electrode slurry; a support part (not shown) that is individually fixed with each of the unit magnets provided in the magnet rows 112a and 112b; and distance adjustment means 111a and 111b connected to the support part and inducing a lifting movement of the support part (or a lifting movement of the unit magnets) in a direction perpendicular to the traveling electrode sheet.

In this case, the distance adjustment means 111a and 111b may receive a spacing reference value from the control part 130 and operate to adjust the separation distance of the first magnet part 110a and the second magnet part 110b in accordance with the received spacing reference value.

By having such a configuration, the first magnet part 110a and the second magnet part 110b can facilitate controlling the intensity of the magnetic field applied to the negative electrode slurry S by adjusting their separation distance. That is, the first magnet part 110a and the second magnet part 110b can increase the intensity of the magnetic field applied to the negative electrode slurry S as the separation distance decreases, and decrease the intensity of the magnetic field applied to the negative electrode slurry S as the separation distance increases.

Further, the first magnet part 110a and the second magnet part 110b may be positioned in the width direction of the negative electrode slurry S so as to face each other, and may be arranged to have opposite poles. For example, the N pole of the first magnet row 112a of the first magnet part 110a and the S pole of the second magnet row 112b of the second magnet part 110b may be facing each other, or the S pole of the first magnet row 112a of the first magnet part 110a and the N pole of the second magnet row 112b of the second magnet part 110b may be facing each other. When the electrode sheet passes through the space between the N and S poles facing each other in this manner, vertical alignment of the carbon-based negative electrode active material with respect to the negative electrode current collector C between the first magnet part 110a and the second magnet part 110b can be more effectively achieved.

Additionally, the first magnet part 110a may be arranged at the upper part of the traveling electrode sheet, but a Halbach arrangement may be applied to the first magnet row 112a to apply a high magnetic field to the carbon-based negative electrode active material of the negative electrode slurry S. Here, the Halbach arrangement is a permanent magnet arrangement that can provide a magnet with a high magnetic field strength by gradually changing the magnetization direction of the magnet. When a magnet having a Halbach arrangement is applied as the magnet row 112a of the first magnet part 110a, it is advantageous to be able to adjust the intensity of the magnetic field applied to the negative electrode slurry S without significantly changing the separation distance between the first magnet part 110a and the second magnet part 110b.

Meanwhile, the separation distance of the first magnet part 110a and the second magnet part 110b may be 10 mm to 50 mm, more specifically, 10 mm to 40 mm; 20 mm to 50 mm; or 15 mm to 45 mm, and the separation distance of the first magnet part 110a and the second magnet part 110b may be the same as the separation distance of the first magnet row 112a and the second magnet row 112b. By adjusting the separation distance of the first magnet part 110a and the second magnet part 110b to the above range, the present invention can perform alignment of the carbon-based negative electrode active material contained in the negative electrode slurry S more efficiently.

Further, in the magnetic alignment device 10, the alignment measuring part 120 is located downstream of the first magnet part 110a and/or the second magnet part 110b relative to the traveling direction of the electrode sheet, and plays a role in measuring the alignment degree of the carbon-based negative electrode active material oriented by the first magnet part 110a and the second magnet part 110b in real time.

In this case, the alignment measuring part 120 may be applied to any means/method commonly used in the art for measuring the alignment of a carbon-based negative electrode active material without being particularly limited, but may preferably include a non-contact measuring device that can prevent damage and/or change of state of the negative electrode active layer. Specifically, the alignment measuring part may include a non-contact measuring device that measures the degree to which the crystal faces of the carbon-based negative electrode active material are oriented, or measures a property that varies with the degree of alignment of the carbon-based negative electrode active material. For example, the non-contact measuring device may include one or more of a spectrophotometer, a colorimeter, a photometer, infrared spectroscopy (FT-IR), nuclear magnetic resonance spectroscopy (NMR), X-ray diffraction spectroscopy (XRD), near-end X-ray fluorescence spectroscopy (NEXAFS), and X-ray photoelectron spectroscopy (XPS).

In one example, the alignment measuring part may include a spectrophotometer or chromatic colorimeter as a non-contact measuring device for rapid alignment measurement of carbon-based negative electrode active materials, considering the speed of measurement.

The colorimeter is a device including a light source and an image sensor, and when the negative electrode active layer is photographed, the color information on the surface of the negative electrode active layer is converted to a color coordinate value and detected, which has the advantage of simple measurement and easy application to continuous processes. Here, the color coordinate value can be expressed in a manner such as SCI (Specific Component Included) or SCE (Specific Component Excluded), standard light source D65 (color temperature: 6500K), CIE 1976, etc. As one example, the alignment of the carbon-based negative electrode active material according to the present invention can satisfy 30≤L*≤40, a*≥0.3, b*≥0.4 when expressed by the CIE 1976 method (L*, a*, b*).

In addition, the alignment measuring part 120 may measure the alignment of the carbon-based negative electrode active material in real time by arranging two or more non-contact measuring devices along the width direction of the traveling electrode sheet to more precisely measure the alignment of the carbon-based negative electrode active material. In this case, it is possible to measure the alignment of the carbon-based negative electrode active material in the width direction of the electrode sheet, which can improve the reliability of the manufactured negative electrode.

Furthermore, the alignment measuring part 120 may include two or more non-contact measuring devices along the traveling direction of the electrode sheet. Specifically, the alignment measuring part 120 may include a first measuring device 121 and a second measuring device 122 disposed in succession along the traveling direction of the electrode sheet. In this case, the error rate of the alignment degree of the carbon-based negative electrode active material measured in real time can be lowered.

In the magnetic alignment device 10, the control part 130 may play a role in controlling the separation distance of the first magnet part 110a and the second magnet part 110b. For this purpose, the magnetic alignment device 10 may receive the alignment of the carbon-based negative electrode active material measured by the alignment measuring part 120 disposed at two or more points along the width direction of the electrode sheet and calculate the deviation thereof. In other words, the control part 130 can calculate the deviation of the alignment of the carbon-based negative electrode active material measured at two or more points along the width direction of the traveling electrode sheet from the alignment measuring part.

Further, the control part 130 may transmit spacing adjustment values of the unit magnets of the first magnet part 110a and the unit magnets of the second magnet part 110b according to the alignment deviation thus calculated to the unit magnets of the first magnet part 110a and the unit points of the second magnet part 110b at the corresponding points, respectively, and adjust the separation distances of the first magnet part 110a and the second magnet part 110b to conform to the transmitted spacing adjustment values.

To perform this series of processes, the control part 130 may include a database (not shown) in which the spacing adjustment values of the first magnet part 110a and the second magnet part 110b are stored per deviation between the alignment degrees of the two or more carbon-based negative electrode active materials.

Here, the spacing adjustment value means a value indicating a degree of adjusting the spacing of the first magnet part 110a and the second magnet part 110b at the present time to narrow the deviation of the alignment degree. For example, if the alignment degree at the first point measured by the alignment measuring part including the spectral colorimeter is L*=35.0 and a*=0.54, and the alignment degree at the second point is L*=37.0 and a*=0.75, the spacing between the first magnet part 110a and the second magnet part 110b can be narrowed by 1 to 5 mm to reduce the alignment degree deviation ΔL*=2.0 and Δa*=0.21.

Such a spacing adjustment value may be stored by obtaining data on the amount of change in the alignment degree of the carbon-based negative electrode active material due to a change in the spacing distance between the first magnet part 110a and the second magnet part 110b using a conventionally installed prior measurement device.

Furthermore, since the alignment of the carbon-based negative electrode active material may vary depending on the density (or concentration) of the carbon-based negative electrode active material contained in the negative electrode slurry S, the density (or concentration) of the carbon-based negative electrode active material contained in the negative electrode slurry S may affect the strength of the magnetic field.

Therefore, the database may further include information on the spacing adjustment values of the first magnet part 110a and the second magnet part 110b per deviation of the alignment measured at two or more points, as well as information on the density (or concentration) of the carbon-based negative electrode active material in the negative electrode slurry to compensate for the deviation of the alignment of the carbon-based negative electrode active material. Further, the aforementioned spacing adjustment value may be a value reflecting data on the density (or concentration) of the carbon-based negative electrode active material in the negative electrode slurry stored in the database.

In addition, the magnetic alignment device 10 may further include a drying part 140 for drying the negative electrode slurry S, in which the carbon-based negative electrode active material is aligned by the first magnet part 110a and second magnet part 110b, between the alignment measuring part 120 and the first and second magnet parts 110a and 110b.

The drying part 140 is formed by including a wall body (not shown) that blocks the periphery except for the take in and take out of the electrode sheet to which the slurry S is applied, and a dryer (not shown) for drying the electrode sheet on the wall of the side from which the electrode sheet to which the electrode slurry is applied is taken out.

When the electrode sheet to which the electrode slurry is applied enters through the inlet of the drying part 140, it receives energy such as light, wavelength, heat, etc. supplied by the opposite wall. Therefore, the wall body is preferably made of an insulating material to prevent the transfer of internal energy to the outside, resulting in heat loss.

Further, the dryer, although not limiting in any way, may be configured to perform a two step drying process in order to maintain the alignment of the carbon-based negative electrode active material contained within the negative electrode active layer. Specifically, the dryer may include a first dryer for drying the negative electrode slurry using light and a second dryer for drying the negative electrode slurry using heat, wherein the first dryer and the second dryer may operate continuously to dry the negative electrode slurry.

The first dryer may be a device for preliminarily drying the negative electrode slurry, and may irradiate the surface of the negative electrode slurry with light or wavelengths as described above. Generally, drying the negative electrode slurry may be accomplished by applying hot air at a high temperature. However, this requires a long drying time for the negative electrode slurry, which can disturb the alignment of the carbon-based negative electrode active materials in the negative electrode slurry. In addition, if the temperature of the hot air is increased to solve this problem, the tendency of drying on the surface of the slurry increases, so that the binder is concentrated on the surface of the slurry by the volatilizing solvent, and migration occurs, which reduces the adhesion strength of the active material layer and the negative electrode current collector. The present invention can be configured to preliminarily dry the electrode slurry by irradiating energy in the form of light or wavelengths using a first dryer to dry the negative electrode slurry while maintaining a high degree of alignment of the carbon-based negative electrode active material without these problems. Such a first dryer may include, for example, an ultraviolet dryer, a near-infrared dryer, a far-infrared dryer, or the like, and may include, in particular, a far-infrared dryer that emits energy with a wavelength of 1 µm or more, more specifically 5 µm or more, 10 µm or more, or 20 µm or more, to achieve a uniform drying rate of the electrode slurry. Unlike near-infrared dryers or infrared dryers conventionally applied in the art, the far-infrared dryer has high energy efficiency due to its long light or wavelength. Furthermore, the far-infrared dryer has the advantage of being able to apply energy uniformly not only to the surface of the negative electrode slurry but also to its interior, thereby increasing the adhesion between the negative electrode slurry and the negative electrode current collector in a short time.

In this case, the first dryer may emit energy at an output density of 50 kW/m²to 1,000 kW/m², and more specifically, may emit energy at an output density of 50 kW/m² to 500 kW/m²; of 50 kW/m² to 250 kW/m²; or of 50 kW/m² to 200 kW/m². By controlling the power density of the first dryer to the above range, the present invention can prevent an excessive power density from inducing uneven drying of the active material layer.

Further, the second dryer may apply heat to the negative electrode slurry that has been pre-dried by light or wavelength to ensure uniform complete drying. Such second dryers may include, without limitation, those conventionally applied in the art, but may include, in particular, hot air dryers, vacuum ovens, and the like, either singly or in combination.

The magnetic alignment device according to the present invention, having the above-described configuration, can reflect the state of the negative electrode slurry in real time to uniformly guide the alignment of the carbon-based negative electrode active material therein, so that the produced negative electrode can show the effect of increasing the mobility of lithium ions and decreasing the resistance during charging and discharging of the battery, thereby improving the charging and discharging performance.

### Method of manufacturing negative electrode

The present invention also provides, in one embodiment,
a method of manufacturing negative electrode, comprising:
applying a negative electrode slurry comprising carbon-based negative electrode active material on a negative electrode current collector;
aligning the carbon-based negative electrode active material contained in the negative electrode slurry using a magnetic alignment device according to above-described present invention;
drying the negative electrode slurry in which the carbon-based negative electrode active material is aligned to form a negative electrode active layer; and
measuring an alignment of the carbon-based negative electrode active material contained at two or more points along a width direction of the formed negative electrode active layer, and adjusting the spacing of the first magnet part and the second magnet part provided in the magnetic alignment device to reflect the deviation of the measured alignment.

The method of manufacturing a negative electrode according to the present invention may include applying a negative electrode slurry comprising a carbon-based negative electrode active material on a negative electrode current collector, and applying a magnetic field to a surface of the applied negative electrode slurry using a magnetic alignment device of the present invention described above to align the carbon-based negative electrode active material in the negative electrode slurry perpendicular to the surface of the negative electrode current collector (or to the traveling direction of the electrode sheet). Furthermore, the above method may be followed by subsequent drying of the negative electrode slurry to form a negative electrode active layer in which the vertical alignment of the carbon-based negative electrode active material is maintained.

**In** this case, the method of manufacturing the negative electrode can measure the alignment of the carbon-based negative electrode active material contained in the dried negative electrode active layer in real time by utilizing the magnetic alignment device described above, and can adjust the spacing of the first magnet part and the second magnet part disposed on the upper and lower portions of the electrode sheet, respectively, according to the measured alignment. Specifically, the manufacturing method can measure the alignment of the carbon-based negative electrode active material at two or more points along the width direction of the negative electrode active layer in real time, and adjust the spacing between the first and second magnet parts provided in the magnetic alignment device to reduce the deviation, if any.

The negative electrode active layer produced in this way has uniformly distributed carbon-based negative electrode active materials aligned perpendicularly to the negative electrode current collector, so that the deviation of the alignment degree when measuring the alignment degree can be significantly lower. For example, when the alignment of the carbon-based negative electrode active material is measured using a spectral colorimeter, the average color coordinate deviation (ΔL*, Δa*, Δb*) representing the deviation of the alignment for three random points included in an arbitrary area (10 cm across and 10 cm long) on the negative electrode active layer may satisfy two or more conditions among ΔL* < 2.0, Δa* < 0.5, and Δb* < 0.5, and more specifically, two or more of ΔL* < 1.0, Δa* < 0.3, and Δb* < 0.3. If the above conditions are not satisfied, the spacing between the first magnet part and the second magnet part, that is, the separation distance, may be adjusted. By including this configuration, the present invention can maintain a uniform alignment of the carbon-based negative electrode active material contained in the negative electrode active layer, which can further improve the reliability of the negative electrode.

In the negative electrode manufacturing method, the step of applying the negative electrode slurry to the negative electrode current collector and the step of drying the negative electrode slurry may be performed in a manner conventionally applied in the art.

In addition, aligning the carbon-based negative electrode active material contained in the negative electrode slurry using the magnetic alignment device, the application condition of the magnetic field may be adjusted to increase the alignment efficiency of the carbon-based negative electrode active material. Specifically, the degree of alignment of the carbon-based negative electrode active material may be controlled by a magnetic field strength, an application time, or the like.

For example, the magnetic field may be applied with a magnetic field strength of 0.5 to 2.0 T, and more specifically, the magnetic field may be applied with a magnetic field strength of 0.9 to 1.5 T; 1.0 to 1.4 T; or 1.0 to 1.2 T.

Further, the magnetic field may be applied for a time period of 0.1 to 20 seconds, more specifically, for a time period of 0.5 to 15 seconds; 0.5 to 12 seconds; 1 to 10 seconds; or 2 to 8 seconds.

### Negative electrode for lithium secondary battery

The present invention provides, in one embodiment, a negative electrode manufactured using a magnetic alignment device according to the present invention as described above.

The negative electrode manufactured according to the present invention may include a carbon-based negative electrode active material and a negative electrode active layer on at least one side of the negative electrode current collector, wherein the negative electrode active layer has a structure of uniformly dispersed carbon-based negative electrode active material aligned vertically with respect to the negative electrode current collector. In one example, when the alignment degree is measured for any three points included in any region (10 cm across and 10 cm long) present on the negative electrode active layer, the deviation (ΔL*, Δa*, Δb*) of the average color coordinates between each point representing the alignment degree may satisfy at least two of the conditions among ΔL* < 2.0, Δa* < 0.5, and Δb* < 0.5.

The negative electrode for a lithium secondary battery according to the present invention includes a negative electrode active layer comprising a carbon-based negative electrode active material on both sides of the negative electrode current collector. The negative electrode active layer is a layer that embodies the electrical activity of the negative electrode, and is prepared by applying an electrode slurry comprising a negative electrode active material that realizes an electrochemical redox reaction during charging and discharging of the battery to both sides of the negative electrode current collector, and then drying and rolling it. The negative electrode active layer includes a carbon-based negative electrode active material as the negative electrode active material to realize electrical activity through a reversible oxidation-reduction reaction during charging and discharging of the battery. Specifically, the carbon-based negative electrode active material refers to a material having carbon atoms as a main component, and such a carbon-based negative electrode active material may include graphite. The graphite may include one or more of natural graphite, synthetic graphite, but preferably natural graphite, or a mixture of natural graphite and synthetic graphite. For example, the carbon-based negative electrode active material may include natural or synthetic graphite alone, or in some cases, a mixture of natural and synthetic graphite. In this case, the mixture ratio of natural graphite to artificial graphite based on weight may be 5-40:60-95, or 10-30:70-90. By including natural graphite and artificial graphite in the mixing ratio as described above, the carbon-based negative electrode active material can solidify the adhesion of the negative electrode active layer to the negative electrode current collector and realize a high orientation of the carbon-based negative electrode active material to the surface of the negative electrode current collector.

The carbon-based negative electrode active material is preferably a spherical graphite assembly formed by aggregation of a plurality of flake graphite. The flake graphite can be natural graphite, artificial graphite, mesophase calcined carbon (bulk mesophase) made from tar and pitch, graphitized cokes (raw coke, green coke, pitch coke, needle coke, petroleum coke, etc.), and the like, and in particular, it is preferred to be assembled using a plurality of highly crystalline natural graphite. In addition, one graphite assembly may be formed from 2 to 100 pieces of flake-shaped graphite, preferably 3 to 20 pieces.

Such carbon-based negative electrode active material, specifically graphite, may have a spherical particle shape, wherein the sphericity of the graphite particles may be 0.75 or more, such as 0.75 to 1.0; 0.75 to 0.95; 0.8 to 0.95; or 0.90 to 0.99. Here, "sphericity" may mean the ratio of the shortest diameter (short diameter) to the longest diameter (long diameter) of any diameter passing through the center of the particle, wherein a sphericity of 1 means that the shape of the particle is spherical. The sphericity may be measured by a particle shape analyzer. The present invention has the advantage that by realizing the shape of the carbon-based negative electrode active material close to a spherical shape, the electrical conductivity of the negative electrode active layer can be realized high, thereby improving the capacity of the battery, and the specific surface area of the negative electrode active material can be increased, thereby improving the adhesion between the negative electrode active layer and the current collector.

In addition, the carbon-based negative electrode active material may exhibit an average particle diameter (D₅₀) of 0.5µm to 10µm, and more specifically, may exhibit an average particle diameter (D₅₀) of 2µm to 7µm; 0.5µm to 5µm; or 1µm to 3µm.

The average particle size of spherical natural graphite can be advantageous to have a smaller particle size to maximize the degree of disorder in the swelling direction for each particle to prevent the particles from swelling due to the charging of lithium ions. However, when the particle size of natural graphite is less than 0.5µm, a large amount of binder is required due to the increase in the number of particles per unit volume, and the degree of sphericity and the yield of sphericity may be lowered. On the other hand, when the maximum particle diameter exceeds 10 µm, the swelling becomes severe, and the binding capability between particles and the binding capability between particles and current collector decreases with repeated charging and discharging, which can significantly reduce the cycle characteristics.

The negative electrode active layer comprising such a carbon-based negative electrode active material can have a controlled degree of alignment of the carbon-based negative electrode active material. By aligning the crystal face of the carbon-based negative electrode active material contained in the negative electrode active layer in a certain direction, the present invention can lower the electrode resistance, thereby further improving the charging performance of the negative electrode active layer.

Here, the degree of alignment (i.e., orientation) of the carbon-based negative electrode active material (e.g., graphite) can be determined by analyzing the crystal faces of graphite.

In one example, the negative electrode active layer may be such that the carbon-based negative electrode active material is vertically aligned with respect to the negative electrode current collector so that the alignment degree (CIE color coordinates: L*, a*, b*) measured using a spectral colorimeter for the negative electrode active layer may satisfy 30≤L*≤40, 0.3≤a*≤0.8, 0.4≤b*≤0.9, and 33≤L*≤37, 0.55≤a*≤0.65, 0.65≤b*≤0.75. Here, L* and a* may be smaller the higher the degree of alignment of the carbon-based negative electrode active material contained in the negative electrode active layer, and b* may be larger the higher the degree of alignment of the carbon-based negative electrode active material contained in the negative electrode active layer.

Here, "color coordinate" means a coordinate in the CIE color space, which is a color value specified by the CIE (Commossion International de l'Eclairage), and any position in the CIE color space can be represented by three coordinate values L*, a*, and b*. Here, the L* value represents brightness, with L*=0 representing black and L*=100 representing white. Further, the a* value indicates whether the color with the corresponding color coordinate is skewed towards pure magenta or pure green, and the b* value indicates whether the color with the corresponding color coordinate is skewed towards pure yellow or pure blue. Specifically, the a* value ranges from -a to +a, with a maximum value of a* (a* max) representing pure magenta and a minimum value of a* (a* min) representing pure green. For example, a negative value of a* indicates a color skewed toward pure green, while a positive value indicates a color skewed toward pure magenta. Comparing a*=80 and a*=50, it means that a*=80 is closer to pure magenta than a*=50. Furthermore, the value of b* ranges from -b to +b. The maximum value of b* (b* max) represents pure yellow, and the minimum value of b* (b* min) represents pure blue. For example, a negative value of b* indicates a color skewed toward pure yellow, while a positive value indicates a color skewed toward pure blue. Comparing b*=80 and b*=20, this means that b*=80 is closer to pure yellow than b*=20.

As another example, the negative electrode active layer may have a carbon-based negative electrode active material vertically aligned with respect to the negative electrode current collector, such that an X-ray diffraction spectroscopy (XRD) measurement of the negative electrode active layer may show the degree of alignment of the carbon-based negative electrode active material to satisfy 0.1 to 5.0 as shown by the following Equation 1: [Equation 1] $O . I = {I}_{004} / {I}_{110}$ in Equation 1,
I₀₀₄ represents the area of the peak representing the (0,0,4) crystal face in the X-ray diffraction spectroscopy (XRD) measurement of the negative electrode active layer,
I₁₁₀ represents the area of the peak representing the (1,1,0) crystal face in an X-ray diffraction (XRD) measurement of the negative electrode active layer.

The crystal face orientation of the carbon-based negative electrode active material can be determined by crystal face analysis of the carbon-based negative electrode active material, such as X-ray diffraction spectroscopy. The orientation index (O.I) of the carbon-based negative electrode active material represented by Equation 1 can be an indicator of the direction in which the crystal structure of the carbon-based negative electrode active material is aligned during X-ray diffraction measurements, specifically, the degree to which the a-b axis crystal planes representing the two-dimensional planar structure of the carbon-based negative electrode active material are aligned with respect to the negative electrode current collector surface. For example, if the negative electrode active layer includes graphite as a carbon-based negative electrode active material, an X-ray diffraction spectroscopy analysis of the negative electrode active layer shows peaks for graphite at 2θ=26.5±0.2°, 42.4±0.2°, 43.4±0.2°, 44.6±0.2°, 54.7±0.2°, and 77.5±0.2°. These represent the (0,0,2), (1,0,0), (1,0,1) R, (1,0,1)H, (0,0,4), and (1,1,0) crystal faces of the graphite contained in the negative electrode active layer. In general, in the case of graphite, graphene layers are placed on the a- and b-axis planes, and these graphene layers are stacked along the c-axis to form a hexagonal or rhombohedral crystal structure. Here, the crystal face peaks are peaks that represent the face characteristics of these crystal structures. Further, the peak at 2θ=43.4±0.2° can also be seen as an overlap of the peaks corresponding to the (1,0,1) R plane of carbon-based materials and the (1,1,1) plane of current collectors, such as Cu.

The present invention is capable of measuring the degree of alignment (O.I) of graphite through the ratio of the areas of the peak at 2θ=77.5±0.2° representing the (1,1,0) plane and the peak at 2θ=54.7±0.2° representing the (0,0,4) plane, specifically, the ratio of the areas obtained by integrating the intensities of the peaks. In addition, X-ray diffraction was measured using a CuK α-ray as the target line, and to improve the peak intensity resolution, the target line was extracted with a monochromator device. In this case, the measurement conditions were 2θ=10° to 90°, scan speed (°/s) was 0.044 to 0.089, and step size was 0.026°/step. In addition, the (0,0,4) plane at 2θ=54.7±0.2° represents the thickness direction characteristics (c-axis direction characteristics) of the laminated structure with the two-dimensional planar structure of the graphite layer, and the (1,1,0) plane at 2θ=77.5±0.2° represents the planar characteristics (a-b-axis direction characteristics) of the laminated graphite layer. Therefore, the smaller the peak in the (0,0,4) plane, which represents the thickness-direction characteristics of the graphite layer plane, and the larger the peak in the (1,1,0) plane, which represents the planar characteristics of the graphite layer, the more the graphite plane is aligned at a high angle to the negative electrode current collector surface. In other words, the degree of alignment (O.I) may mean that the angle or tilt of the graphite layer surface with respect to the negative electrode current collector surface is close to 90° when the value is close to 0, and the tilt with respect to the negative electrode current collector surface is close to 0° or 180° when the value is larger. In this aspect, the negative electrode active layer according to the present invention may have a lower degree of alignment (O.I) of graphite compared to the case where no magnetic field is applied, since the carbon-based negative electrode active material is vertically aligned with respect to the negative electrode current collector. Specifically, the alignment of the carbon-based negative electrode active material in the negative electrode active layer may be from 0.1 to 5.0, and more specifically, from 0.1 to 4.5; 0.1 to 4.0; 0.1 to 3.5; 0.1 to 3.0; 0.1 to 2.5; 0.1 to 2.0; 0.1 to 1.0; 0.5 to 2.9; 1.0 to 4.5; 1.1 to 4.1; 1.5 to 4.0; 1.1 to 3.5; 1.5 to 3.0; 0.9 to 2.9; 0.1 to 2.4; 0.1 to 2.1; 0.1 to 1.9; 2.0 to 5.0; 2.0 to 4.0; 2.1 to 3.9; 2.5 to 3.9; 3.1 to 4.5; 0.1 to 0.6; 0.15 to 0.6; 0.15 to 0.5; 0.2 to 0.5; 0.2 to 0.4; 0.25 to 0.45; or 0.3 to 0.5.

Furthermore, the negative electrode active layer may uniformly induce a vertical alignment of the carbon-based negative electrode active material with respect to the negative electrode current collector, resulting in a low deviation of the alignment of the carbon-based negative electrode active material measured arbitrarily in a unit area.

In one example, the negative electrode active layer may be such that, when the alignment degree is measured for any three points included in any region (10 cm across and 10 cm long) present on the negative electrode active layer, the average color coordinate deviation (ΔL*, Δa*, Δb*) between each point may satisfy two or more conditions among ΔL* < 2.0, Δa* < 0.5, and Δb* < 0.5, and more specifically, two or more conditions among ΔL* < 1.0, Δa* < 0.3, and Δb* < 0.3.

As another example, the negative electrode active layer may have a deviation from the carbon-based negative electrode active material alignment represented by Equation 1 in an X-ray diffraction (XRD) measurement of any three points present in a unit area (10 cm×10 cm) of the negative electrode active layer of less than 5% based on an average value, and may be more specifically less than 4%, less than 3%, less than 2%, or less than 1%.

Meanwhile, the negative electrode active layer according to the present invention may optionally further include, in addition to the negative electrode active material, a conductor, a binder, and other additives, etc. as needed.

The conductor may include one or more types among carbon black, acetylene black, ketjen black, carbon nanotubes, carbon fibers, and the like, but is not limited thereto. As one example, the negative electrode active layer may contain carbon nanotubes or carbon fibers as a conductor alone or in combination.

In such a case, the content of the conductor may be from 0.1 to 10 parts by weight, more specifically from 0.1 to 8 parts by weight, from 0.1 to 5 parts by weight, from 0.1 to 3 parts by weight, or from 2 to 6 parts by weight, based on a total of 100 parts by weight of the negative electrode active layer. By controlling the content of the conductor to a range as described above, the present invention can prevent the resistance of the negative electrode from increasing due to a low content of the conductor, thereby reducing the charging capacity. Furthermore, by controlling the content of the conductor to the above range, the present invention can prevent the content of the negative electrode active material from decreasing due to an excessive amount of the conductor, resulting in a decrease in the charging capacity, or a decrease in the fast charging characteristics due to an increase in the loading amount of the negative electrode active layer.

In addition, the binder can be appropriately applied as a component that assists in the bonding of the active material and the conductor and the bonding to the current collector to the extent that it does not degrade the electrical properties of the electrode, and may include one or more among vinylidene fluoride-hexafluoropropylene copolymer (PVDF-co-HFP), polyvinylidenefluoride (PVdF), and polyacrylonitrile, polymethylmethacrylate, polyvinyl alcohol, carboxymethyl cellulose (CMC), starch, hydroxypropyl cellulose, regenerated cellulose, polyvinylpyrrolidone, tetrafluoroethylene, polyethylene, polypropylene, polyacrylic acid, ethylene-propylene-diene monomer, sulfonated ethylene-propylene-diene monomer, styrene butadiene rubber, and fluorinated rubber.

The content of the binder may be from 0.1 to 10 parts by weight, more particularly from 0.1 to 8 parts by weight, from 0.1 to 5 parts by weight, from 0.1 to 3 parts by weight, or from 2 to 6 parts by weight, based on a total of 100 parts by weight of the negative electrode active layer. By controlling the content of the binder contained in the negative electrode active layer to the above range, the present invention can prevent the adhesive strength of the active layer from being reduced due to a low content of binder or the electrical properties of the electrode from being reduced due to an excess of binder.

Moreover, the negative electrode current collector is not particularly limited as long as it has a high conductivity without causing chemical changes in the battery, and for example, copper, stainless steel, nickel, titanium, calcined carbon, and the like can be used, and in the case of copper or stainless steel, a surface treatment with carbon, nickel, titanium, silver, and the like can also be used. In addition, the average thickness of the negative electrode current collector may be appropriately applied from 1 to 500 µm in consideration of the conductivity and total thickness of the negative electrode to be prepared.

Hereinafter, the present invention will be described in more detail by way of examples and experimental examples.

However, the following examples and experimental examples are only illustrative of the present invention, and the contents of the present invention are not limited to the following examples and experimental examples.

### Examples 1 and 2. Preparation of negative electrode for lithium secondary battery

A negative electrode for a lithium secondary battery was manufactured using the magnetic alignment device of the present invention having a structure as shown in FIG. 1, but the number of non-contact measuring devices introduced in the alignment measuring part was adjusted as shown in Table 1.

Specifically, natural graphite was prepared as the negative electrode active material, and 97 parts by weight of the negative electrode active material and 3 parts by weight of styrene butadiene rubber (SBR) were mixed with water to form a negative electrode slurry, and then the negative electrode slurry was cast on a copper sheet that was being transported in a roll-to-roll transfer (transfer speed: 3 m/min) using a die coater. Here, the negative electrode slurry was cast in a striped pattern of three lines along the traveling direction of the copper sheet, but the average thickness of the negative electrode slurry of the first and third lines was controlled to be 100 µm, and the average thickness of the negative electrode slurry of the second line located in the center was controlled to be 200 µm.

Then, a magnetic field was applied to the negative electrode slurry by moving the copper sheet so that the applied negative electrode slurry passed between the first and second magnet parts. At this time, the first magnet part and the second magnet part adjusted the distance adjustment means to individually adjust the spacing distance of the unit magnets provided in the first magnet row (including 5 to 20 unit magnets) and the second magnet row (including 5 to 20 unit magnets), respectively, in accordance with the spacing reference value transmitted from the control part. Here, the spacing distance between the first magnet row and the second magnet row was adjusted from 20 to 40 mm according to the spacing reference value transmitted from the control part, and the intensity of the applied magnetic field was 1.0T.

In addition, in order to dry the negative electrode slurry with a magnetic field applied, a copper thin plate with a magnetic field applied to the negative electrode slurry was moved to the drying part, and the negative electrode slurry was dried to produce a negative electrode for a lithium secondary battery. However, immediately after drying the negative electrode slurry, the alignment of the carbon-based negative electrode active material in the dried negative electrode slurry, i.e., the negative electrode active layer, was measured, and the measured alignment was transmitted to the control part so that the control part can transmit the spacing reference value of the unit magnets of the first magnet part and the second magnet part according to the received alignment.

Here, the alignment of the carbon-based negative electrode active material was measured using a spectrophotometer or an X-ray diffraction spectrometer (XRD) installed at three points along the width direction of the electrode sheet as an alignment measuring part, as shown in Table 1. The alignment of each point measured by the alignment measuring part was transmitted to the control part. The control part calculated an alignment deviation from the received alignment of each point. Then, the control part compared the calculated alignment deviation with the spacing adjustment values of the first magnet part 110a and the second magnet part 110b for each deviation between the alignments of the carbon-based negative electrode active material stored in the database, and transmitted the corresponding spacing adjustment values to the unit magnet of the first magnet part 110a and the unit point of the second magnet part 110b at that point, respectively. The first magnet part 110a and the second magnet part 110b continuously performed the negative electrode manufacturing process while adjusting the separation distance of the unit magnets at the corresponding points to conform to the received spacing adjustment value.

**[Table 1]**

| | Alignment measuring part |
|---|---|
| Comparative Example 1 | Not included |
| Example 1 | X-ray diffraction spectrometer |
| Example 2 | Spectral colorimeter |

Here, the alignment of the carbon-based negative electrode active material was obtained in CIE color coordinates (L*, a*, b*) when a spectral colorimeter was used as the alignment measuring part, and the alignment of the carbon-based negative electrode active material was obtained when an X-ray diffraction spectrometer (XRD) was used as the alignment measuring part using the following equation 1. Furthermore, the measurement conditions of the above X-ray diffraction (XRD) were as follows:
- Target: Cu (Kα-ray) graphite monochromator
- Slit: Divergence slit = 1 degree, Reception slit = 0.1 mm, Scattering slit = 1 degree [Equation 1] $O . I = {I}_{004} / {I}_{110}$ in Equation 1,
   I₀₀₄ represents the area of the peak representing the (0,0,4) crystal face in the X-ray diffraction spectroscopy (XRD) measurement of the negative electrode active layer,
   I₁₁₀ represents the area of the peak representing the (1,1,0) crystal face in an X-ray diffraction (XRD) measurement of the negative electrode active layer.

### Experimental Example. Evaluation of alignment uniformity of carbon-based negative electrode active material

The following experiments were conducted to evaluate the alignment uniformity of the carbon-based negative electrode active material as a performance of the magnetic alignment device according to the present invention.

Specifically, in the negative electrode active layer of each negative electrode manufactured in the Examples and Comparative Examples, three points were arbitrarily set in the traveling direction and width direction of the negative electrode during manufacturing to establish points A through F, respectively. At this time, each point was set to have a size of 10 cm in length and 10 cm in width.

Using a spectral colorimeter and an X-ray diffraction spectrometer, the alignment of the carbon-based negative electrode active material at each of the set points was measured, and from the measured alignment, i) the average alignment (i.e., the average value of the alignment at each point) and ii) the deviation of the average alignment, of the carbon-based negative electrode active material contained at each point were calculated, respectively.

At this time, the measurement conditions of the spectral colorimeter and the X-ray diffraction spectrometer were adjusted to be the same as in Example 1, and the results are shown in Table 2 below.

**[Table 2]**

| | CIE Lab. | | | | | | O.I (I₀₀₄/I₁₁₀) | |
|---|---|---|---|---|---|---|---|---|
| | Average alignment | | | Deviation | | | Average alignment | Deviation |
| | L* | a* | b* | ΔL | Δa | Δb | | |
| Comparative Example 1 | 40.1 | 0.8 | 0.5 | 1.5 | 0.9 | 1.1 | 0.91 | 8.8±0.2% |
| Example 1 | 36.1 | 0.6 | 0.7 | 0.7 | 0.3 | 0.2 | 0.24 | 1.5±0.1% |
| Example 2 | 35.5 | 0.5 | 0.6 | 0.6 | 0.2 | 0.2 | 0.22 | 1.3±0.1% |

As shown in the Table 2, the negative electrode prepared using the magnetic alignment device according to the present invention was found to have a high degree of alignment of the carbon-based negative electrode active material contained in the negative electrode active layer. Furthermore, the negative electrode active layer of the prepared negative electrode was found to have a low deviation of the alignment degree of any three points from the average value. This means that the magnetic alignment device according to the present invention aligns the carbon-based negative electrode active material uniformly on the negative electrode current collector with a high degree of alignment.

From these results, it can be seen that the magnetic alignment device according to the present invention can align the carbon-based negative electrode active material with a high degree of alignment and uniformity with respect to the negative electrode current collector by measuring the alignment of the carbon-based negative electrode active material in real time and individually reflecting it to the unit magnets included in the first magnet row of the first magnet part and the second magnet row of the second magnet part.

The technical scope of the present invention is not limited to what is described in the detailed description of the specification, but should be defined by the patent claims.

### [Reference Numerals

10: MAGNETIC ALIGNMENT DEVICE
20: TRANSFER PART
30: COATING PART (DIE COATER)
110a: FIRST MAGNET PART
111a: FIRST DISTANCE ADJUSTMENT MEANS
112a: FIRST MAGNET ROW
110b: SECOND MAGNET PART
111b: SECOND DISTANCE ADJUSTMENT MEANS
112b: SECOND MAGNET ROW
120: ALIGNMENT MEASURING PART
121: FIRST SPECTROPHOTOMETER
122: SECOND SPECTROPHOTOMETER
130: CONTROL PART
140: DRYING PART
C: NEGATIVE ELECTRODE CURRENT COLLECTOR
S: NEGATIVE ELECTRODE SLURRY

## Claims

1. A magnetic alignment device (10) for a negative electrode in which a negative electrode slurry (S) including a carbon-based negative electrode active material is applied to a negative electrode sheet applied on a negative electrode current collector (C) to orient a carbon-based negative electrode active material by applying a magnetic force, comprising:
a first magnet part (110a) and a second magnet part (110b) arranged at an upper portion and a lower portion of the traveling electrode sheet, respectively;
an alignment measuring part (120) disposed downstream of the first magnet part (110a) and the second magnet part (110b) relative to a traveling direction of the electrode sheet to measure the alignment of the carbon-based negative electrode active material to the negative electrode current collector (C); and
a control part (130) for adjusting a separation distance between the first magnet part (110a) and the second magnet part (110b) according to a degree of alignment of a carbon-based negative electrode active material measured at the alignment measuring part (120),
wherein the first magnet part (110a) and the second magnet part (110b) each include a plurality of unit magnets disposed in the width direction of the negative electrode slurry (S), wherein the unit magnets in one of the first magnet part and the second magnet part individually perform a lifting movement in the vertical direction with respect to the traveling electrode sheet, so that the separation distance from the opposing unit magnets in the other of the first magnet part (110a) and the second magnet part (110b) centered on the electrode sheet is adjusted.

2. The magnetic alignment device (10) for negative electrode of claim 1, wherein the alignment measuring part (120) includes at least two non-contact gauges along the width direction of the traveling electrode sheet.

3. The magnetic alignment device (10) for negative electrode of claim 2, wherein the non-contact gauge includes one or more of the following: spectrophotometer, chromatic colorimeter, photometer, infrared spectroscopy (FT-IR), nuclear magnetic resonance spectroscopy (NMR), X-ray diffraction spectroscopy (XRD), near-field X-ray fluorescence spectroscopy (NEXAFS), and X-ray photoelectron spectroscopy (XPS).

4. The magnetic alignment device (10) for negative electrode of claim 1, wherein the control part (130) calculates an alignment deviation from the alignment of two or more carbon-based negative electrode active materials measured along the width direction of the traveling electrode sheet, and adjusts the separation distance between the unit magnets of the first magnet part (110a) and the unit magnets of the second magnet part (110b) disposed on a corresponding point according to the calculated alignment deviation.

5. The magnetic alignment device (10) for negative electrode of claim 1, wherein the control part (130) is provided with a database storing a spacing adjustment value of the unit magnets of the first magnet part (110a) and the unit magnets of the second magnet part (110b) according to an alignment deviation of the carbon-based negative electrode active material.

6. The magnetic alignment device (10) for negative electrode of claim 1, wherein each of the unit magnets provided in the first magnet part (110a) and the second magnet part (110b) comprises:
a support part individually fixed to each of the unit magnets; and
a distance adjustment means (111a, 111b) connected to the support part and inducing the lifting movement of the support part in the vertical direction with respect to the traveling electrode sheet.

7. The magnetic alignment device (10) for negative electrode of claim 1, wherein the separation distance between the first magnet part (110a) and the second magnet part (110b) is adjusted from 10 mm to 50 mm.

8. The magnetic alignment device (10) for negative electrode of claim 1, wherein the first magnet part (110a) and the second magnet part (110b) comprise magnets having opposite poles.

9. The magnetic alignment device (10) for negative electrode of claim 1, wherein the magnetic alignment device (10) further comprises a drying part (140) for drying the negative electrode slurry (S), in which the carbon-based negative electrode active material is aligned, between the alignment measuring part (120) and the first and second magnet parts (110a, 110b).

10. A method for manufacturing negative electrode comprising:
applying a negative electrode slurry (S) comprising carbon-based negative electrode active material on a negative electrode current collector (C);
aligning a carbon-based negative electrode active material contained in the negative electrode slurry (S) using a magnetic alignment device (10) according to claim 1;
drying the negative electrode slurry (S) in which the carbon-based negative electrode active material is aligned to form a negative electrode active layer; and
measuring an alignment of the carbon-based negative electrode active material contained at two or more points along a width direction of the formed negative electrode active layer, and adjusting the separation distance of the first magnet part (110a) and the second magnet part (110b) provided in the magnetic alignment device (10) according to the calculated alignment deviation.

11. The method for manufacturing negative electrode of claim 10, wherein the separation distance of the first magnet part (110a) and the second magnet part (110b) is adjusted such that, when measuring the alignment of three points included in an arbitrary area which is 10 cm across and 10 cm long on the negative electrode active layer, the average color coordinate deviation (ΔL*, Δa*, Δb*) between each point satisfies at least two of the conditions among ΔL* < 2.0, Δa* < 0.5, and Δb* < 0.5.

12. The method for manufacturing negative electrode of claim 10, wherein the negative electrode active layer has an alignment degree of the carbon-based negative electrode active material of 0.1 to 5.0 shown in the following equation 1: [Equation 1] $O . I = {I}_{004} / {I}_{110}$ in Equation 1,
I₀₀₄ represents the area of the peak representing the (0,0,4) crystal face in X-ray diffraction spectroscopy (XRD) measurement of the negative electrode active layer,
I₁₁₀ represents the area of the peak representing the (1,1,0) crystal face in an X-ray diffraction (XRD) measurement of the negative electrode active layer.

13. A negative electrode for lithium secondary battery comprising:
a negative electrode current collector (C); and
a negative electrode active layer provided on at least one side of the negative electrode current collector (C), and including a carbon-based negative electrode active material,
wherein when measuring the color coordinates of any three points included in the unit area, the average color coordinate deviation between each points satisfies at least two conditions among ΔL* < 2.0, Δa* < 0.5, and Δb* < 0.5, wherein the average color coordinate deviation is measured as laid out in the disclosure as filed,
the negative electrode is manufactured by the negative electrode manufacturing method according to claim 10.

14. The negative electrode for lithium secondary battery of claim 13, wherein the negative electrode active layer has an alignment degree of the carbon-based negative electrode active material of 0.1 to 5.0 shown in the following equation 1: [Equation 1] $O . I . = {I}_{004} / {I}_{110}$ in Equation 1,
I₀₀₄ represents the area of the peak representing the (0,0,4) crystal face in X-ray diffraction spectroscopy (XRD) measurement of the negative electrode active layer,
I₁₁₀ represents the area of the peak representing the (1,1,0) crystal face in an X-ray diffraction (XRD) measurement of the negative electrode active layer.

## Patentansprüche

1. Magnetische Ausrichtungsvorrichtung (10) für eine negative Elektrode, bei der eine Negativelektrodenschlämme (S), die ein kohlenstoffbasiertes Negativelektroden-Aktivmaterial enthält, auf eine Negativelektrodenbahn aufgebracht ist, die auf einen Negativelektroden-Stromkollektor (C) aufgebracht ist, um ein kohlenstoffbasiertes Negativelektroden-Aktivmaterial durch Anlegen einer Magnetkraft auszurichten, umfassend:
• ein erstes Magnetteil (110a) und ein zweites Magnetteil (110b), die an einem oberen Abschnitt bzw. einem unteren Abschnitt der laufenden Elektrodenbahn angeordnet sind;
• ein Ausrichtungsmessungsteil (120), das stromabwärts des ersten Magnetteils (110a) und des zweiten Magnetteils (110b) in Bezug auf eine Laufrichtung der Elektrodenbahn angeordnet ist, um die Ausrichtung des kohlenstoffbasierten Negativelektroden-Aktivmaterials zu dem Negativelektroden-Stromkollektor (C) zu messen; und
• ein Steuerteil (130) zum Einstellen eines Trennungsabstands zwischen dem ersten Magnetteil (110a) und dem zweiten Magnetteil (110b) gemäß einem am Ausrichtungsmessungsteil (120) gemessenen Ausrichtungsgrad eines kohlenstoffbasierten Negativelektroden-Aktivmaterials,
wobei das erste Magnetteil (110a) und das zweites Magnetteil (110b) jeweils eine Vielzahl von Einheitsmagneten enthalten, die in der Breitenrichtung der Negativelektrodenschlämme (S) angeordnet sind, wobei die Einheitsmagnete in einem von dem ersten Magnetteil und dem zweiten Magnetteil einzeln eine Hebebewegung in der vertikalen Richtung in Bezug auf die laufende Elektrodenbahn ausführen, so dass der Trennungsabstand von dem gegenüberliegenden Einheitsmagneten in dem anderen von dem ersten Magnetteil (110a) und dem zweiten Magnetteil (110b) zentriert auf die Elektrodenbahn eingestellt wird.

2. Magnetische Ausrichtungsvorrichtung (10) für eine negative Elektrode nach Anspruch 1, wobei das Ausrichtungsmessungsteil (120) mindestens zwei berührungslose Messlehren entlang der Breitenrichtung der laufenden Elektrodenbahn enthält.

3. Magnetische Ausrichtungsvorrichtung (10) für eine negative Elektrode nach Anspruch 2, wobei die berührungslose Messlehre eines oder mehrere der folgenden enthält: Spektrophotometer, chromatisches Kolorimeter, Photometer, Infrarotspektroskopie (FT-IR), magnetische Kernresonanzspektroskopie (NMR), Röntgenbeugungsspektroskopie (XRD), Nahfeld-Röntgenfluoreszenzspektroskopie (NEXAFS) und Röntgen-Photoelektronenspektroskopie (XPS).

4. Magnetische Ausrichtungsvorrichtung (10) für eine negative Elektrode nach Anspruch 1, wobei das Steuerteil (130) eine Ausrichtungsabweichung aus der Ausrichtung von zwei oder mehr kohlenstoffbasierten Negativelektroden-Aktivmaterialien berechnet, die entlang der Breitenrichtung der laufenden Elektrodenbahn gemessen wird, und den Trennungsabstand zwischen den Einheitsmagneten des ersten Magnetteils (110a) und den Einheitsmagneten des zweiten Magnetteils (110b), die an einer entsprechenden Stelle angeordnet sind, gemäß der berechneten Ausrichtungsabweichung einstellt.

5. Magnetische Ausrichtungsvorrichtung (10) für eine negative Elektrode nach Anspruch 1, wobei das Steuerteil (130) mit einer Datenbank versehen ist, die einen Abstandseinstellwert der Einheitsmagnete des ersten Magnetteils (110a) und der Einheitsmagnete des zweiten Magnetteils (110b) gemäß einer Ausrichtungsabweichung des kohlenstoffbasierten Negativelektroden-Aktivmaterials speichert.

6. Magnetische Ausrichtungsvorrichtung (10) für eine negative Elektrode nach Anspruch 1, wobei jeder der in dem ersten Magnetteil (110a) und dem zweiten Magnetteil (110b) bereitgestellten Einheitsmagnete umfasst:
• ein Trägerteil, das einzeln an jedem der Einheitsmagnete befestigt ist; und
• ein Abstandseinstellmittel (111a, 111b), das mit dem Trägerteil verbunden ist und die Hebebewegung des Trägerteils in der vertikalen Richtung in Bezug auf die laufende Elektrodenbahn induziert.

7. Magnetische Ausrichtungsvorrichtung (10) für eine negative Elektrode nach Anspruch 1, wobei der Trennungsabstand zwischen dem ersten Magnetteil (110a) und dem zweiten Magnetteil (110b) von 10 mm bis 50 mm eingestellt wird.

8. Magnetische Ausrichtungsvorrichtung (10) für eine negative Elektrode nach Anspruch 1, wobei das erste Magnetteil (110a) und das zweite Magnetteil (110b) Magnete mit entgegengesetzten Polen umfassen.

9. Magnetische Ausrichtungsvorrichtung (10) für eine negative Elektrode nach Anspruch 1, wobei die magnetische Ausrichtungsvorrichtung (10) ferner ein Trocknungsteil (140) zum Trocknen der Negativelektrodenschlämme (S), in der das kohlenstoffbasierte Negativelektroden-Aktivmaterial ausgerichtet ist, zwischen dem Ausrichtungsmessungsteil (120) und dem ersten und dem zweiten Magnetteil (110a, 110b) umfasst.

10. Verfahren zur Herstellung einer negativen Elektrode, umfassend:
• Aufbringen einer Negativelektrodenschlämme (S), die ein kohlenstoffbasiertes Negativelektroden-Aktivmaterial umfasst, auf einen Negativelektroden-Stromkollektor (C);
• Ausrichten eines in der Negativelektrodenschlämme (S) enthaltenen kohlenstoffbasierten Negativelektroden-Aktivmaterials unter Verwendung einer magnetischen Ausrichtungsvorrichtung (10) nach Anspruch 1;
• Trocknen der Negativelektrodenschlämme (S), in der das kohlenstoffbasierte Negativelektroden-Aktivmaterial ausgerichtet ist, um eine Negativelektroden-Aktivschicht zu bilden; und
• Messen einer Ausrichtung des enthaltenen kohlenstoffbasierten Negativelektroden-Aktivmaterials an zwei oder mehr Punkten entlang einer Breitenrichtung der gebildeten Negativelektroden-Aktivschicht und Einstellen des Abstands des in der magnetischen Ausrichtungsvorrichtung (10) vorgesehenen ersten Magnetteils (110a) und zweiten Magnetteils (110b) gemäß der berechneten Ausrichtungsabweichung.

11. Verfahren zur Herstellung einer negativen Elektrode nach Anspruch 10, wobei der Trennungsabstand des ersten Magnetteils (110a) und des zweiten Magnetteils (110b) so eingestellt wird, dass bei der Messung der Ausrichtung von drei Punkten, die in einem beliebigen Bereich enthalten sind, der 10 cm breit und 10 cm lang auf der Negativelektroden-Aktivschicht ist, die durchschnittliche Farbkoordinatenabweichung (ΔL*, Δa*, Δb*) zwischen jedem Punkt mindestens zwei der Bedingungen unter ΔL* < 2,0, Δa* < 0,5 und Δb* < 0,5 erfüllt.

12. Verfahren zur Herstellung einer negativen Elektrode nach Anspruch 10, wobei die Negativelektroden-Aktivschicht einen in der folgenden Gleichung 1 gezeigten Ausrichtungsgrad des kohlenstoffbasierten Negativelektroden-Aktivmaterials von 0,1 bis 5,0 aufweist: [Gleichung 1] $O . I = \frac{{I}_{004}}{{I}_{110}}$ in Gleichung 1
stellt I₀₀₄ die Fläche des Peaks dar, der die (0,0,4)-Kristallfläche bei einer Röntgenbeugungsspektroskopie(XRD)-Messung der Negativelektroden-Aktivschicht darstellt,
stellt I₁₁₀ die Fläche des Peaks dar, der die (1,1,0)-Kristallfläche bei einer Röntgenbeugungs(XRD)-Messung der Negativelektroden-Aktivschicht darstellt.

13. Negative Elektrode für eine Lithium-Sekundärbatterie, umfassend:
• einen Negativelektroden-Stromkollektor (C); und
• eine Negativelektroden-Aktivschicht, die auf mindestens einer Seite des Negativelektroden-Stromkollektors (C) bereitgestellt ist und ein kohlenstoffbasiertes Negativelektroden-Aktivmaterial enthält,
wobei bei der Messung der Farbkoordinaten von drei beliebigen Punkten, die in der Einheitsfläche enthalten sind, die durchschnittliche Farbkoordinatenabweichung zwischen jedem Punkt mindestens zwei Bedingungen unter ΔL* < 2,0, Δa* < 0,5 und Δb* < 0,5 erfüllt, wobei die durchschnittliche Farbkoordinatenabweichung wie in der eingereichten Offenbarung dargelegt gemessen wird,
wobei die negative Elektrode durch das Verfahren zur Herstellung einer negativen Elektrode nach Anspruch 10 hergestellt ist.

14. Negative Elektrode für eine Lithium-Sekundärbatterie nach Anspruch 13, wobei die Negativelektroden-Aktivschicht einen in der folgenden Gleichung 1 gezeigten Ausrichtungsgrad des kohlenstoffbasierten Negativelektroden-Aktivmaterials von 0,1 bis 5,0 aufweist: [Gleichung 1] $O . I = \frac{{I}_{004}}{{I}_{110}}$ in Gleichung 1
stellt I₀₀₄ die Fläche des Peaks dar, der die (0,0,4)-Kristallfläche bei einer Röntgenbeugungsspektroskopie(XRD)-Messung der Negativelektroden-Aktivschicht darstellt,
stellt I₁₁₀ die Fläche des Peaks dar, der die (1,1,0)-Kristallfläche bei einer Röntgenbeugungs(XRD)-Messung der Negativelektroden-Aktivschicht darstellt.

## Revendications

1. Dispositif d'alignement magnétique (10) pour une électrode négative, dans lequel une suspension d'électrode négative (S) comprenant une matière active d'électrode négative à base de carbone est appliquée sur une feuille d'électrode négative appliquée sur un collecteur de courant d'électrode négative (C) pour orienter une matière active d'électrode négative à base de carbone par application d'une force magnétique, comprenant :
une première partie d'aimant (110a) et une seconde partie d'aimant (110b) disposées respectivement au niveau d'une partie supérieure et d'une partie inférieure de la feuille d'électrode en défilement ;
une partie de mesure d'alignement (120) disposée en aval de la première partie d'aimant (110a) et de la seconde partie d'aimant (110b) par rapport à une direction de défilement de la feuille d'électrode pour mesurer l'alignement de la matière active d'électrode négative à base de carbone par rapport au collecteur de courant d'électrode négative (C) ; et
une partie de commande (130) pour régler une distance de séparation entre la première partie d'aimant (110a) et la seconde partie d'aimant (110b) selon un degré d'alignement d'une matière active d'électrode négative à base de carbone mesuré au niveau de la partie de mesure d'alignement (120),
dans lequel la première partie d'aimant (110a) et la seconde partie d'aimant (110b) comprennent chacune une pluralité d'aimants unitaires disposés dans la direction de la largeur de la suspension d'électrode négative (S), dans lequel les aimants unitaires dans l'une parmi la première partie d'aimant et la seconde partie d'aimant effectuent individuellement un mouvement de levage dans la direction verticale par rapport à la feuille d'électrode en défilement, de sorte que la distance de séparation par rapport à l'aimant unitaire opposé dans l'autre de la première partie d'aimant (110a) et de la seconde partie d'aimant (110b) centrée sur la feuille d'électrode soit ajustée.

2. Le dispositif d'alignement magnétique (10) pour électrode négative selon la revendication 1, dans lequel la partie de mesure d'alignement (120) comprend au moins deux jauges sans contact le long de la direction de la largeur de la feuille d'électrode en défilement.

3. Le dispositif d'alignement magnétique (10) pour électrode négative selon la revendication 2, dans lequel la jauge sans contact comprend un ou plusieurs parmi : un spectrophotomètre, un colorimètre chromatique, un photomètre, la spectroscopie infrarouge (FT-IR), la spectroscopie de résonance magnétique nucléaire (RMN), la spectroscopie de diffraction des rayons X (DRX), la spectroscopie de fluorescence de rayons X en champ proche (NEXAFS) et la spectroscopie de photoélectrons induits par rayons X (XPS).

4. Le dispositif d'alignement magnétique (10) pour électrode négative selon la revendication 1, dans lequel la partie de commande (130) calcule un écart d'alignement à partir de l'alignement de deux ou plus matières actives d'électrode négative à base de carbone mesuré le long de la direction de la largeur de la feuille d'électrode en défilement, et ajuste la distance de séparation entre les aimants unitaires de la première partie d'aimant (110a) et les aimants unitaires de la seconde partie d'aimant (110b) disposés sur un point correspondant selon l'écart d'alignement calculé.

5. Le dispositif d'alignement magnétique (10) pour électrode négative selon la revendication 1, dans lequel la partie de commande (130) est pourvue d'une base de données stockant une valeur de réglage d'espacement des aimants unitaires de la première partie d'aimant (110a) et des aimants unitaires de la seconde partie d'aimant (110b) selon un écart d'alignement de la matière active d'électrode négative à base de carbone.

6. Le dispositif d'alignement magnétique (10) pour électrode négative selon la revendication 1, dans lequel chacun des aimants unitaires prévus dans la première partie d'aimant (110a) et la seconde partie d'aimant (110b) comprend :
une partie de support fixée individuellement à chacun des aimants unitaires ; et
un moyen de réglage de distance (111a, 111b) connecté à la partie de support et induisant le mouvement de levage de la partie de support dans la direction verticale par rapport à la feuille d'électrode en défilement.

7. Le dispositif d'alignement magnétique (10) pour électrode négative selon la revendication 1, dans lequel la distance de séparation entre la première partie d'aimant (110a) et la seconde partie d'aimant (110b) est ajustée de 10 mm à 50 mm.

8. Le dispositif d'alignement magnétique (10) pour électrode négative selon la revendication 1, dans lequel la première partie d'aimant (110a) et la seconde partie d'aimant (110b) comprennent des aimants ayant des pôles opposés.

9. Le dispositif d'alignement magnétique (10) pour électrode négative selon la revendication 1, dans lequel le dispositif d'alignement magnétique (10) comprend en outre une partie de séchage (140) pour sécher la suspension d'électrode négative (S), dans laquelle la matière active d'électrode négative à base de carbone est alignée, entre la partie de mesure d'alignement (120) et les première et seconde parties d'aimant (110a, 110b).

10. Procédé de fabrication d'une électrode négative comprenant :
l'application d'une suspension d'électrode négative (S) comprenant une matière active d'électrode négative à base de carbone sur un collecteur de courant d'électrode négative (C) ;
l'alignement d'une matière active d'électrode négative à base de carbone contenue dans la suspension d'électrode négative (S) à l'aide d'un dispositif d'alignement magnétique (10) selon la revendication 1 ;
le séchage de la suspension d'électrode négative (S) dans laquelle la matière active d'électrode négative à base de carbone est alignée pour former une couche active d'électrode négative ; et
la mesure d'un alignement de la matière active d'électrode négative à base de carbone contenue au niveau de deux points ou plus le long d'une direction de la largeur de la couche active d'électrode négative formée, et le réglage de l'espacement de la première partie d'aimant (110a) et de la seconde partie d'aimant (110b) prévues dans le dispositif d'alignement magnétique (10) selon l'écart d'alignement calculé.

11. Le procédé de fabrication d'une électrode négative selon la revendication 10, dans lequel la distance de séparation de la première partie d'aimant (110a) et de la seconde partie d'aimant (110b) est ajustée de sorte que, lors de la mesure d'alignement de trois points inclus dans une zone arbitraire de 10 cm de large et 10 cm de long sur la couche active d'électrode négative, l'écart moyen de coordonnées de couleur (ΔL*, Δa*, Δb*) entre chaque point satisfait à au moins deux des conditions parmi ΔL* < 2,0, Δa* < 0,5 et Δb* < 0,5.

12. Le procédé de fabrication d'une électrode négative selon la revendication 10, dans lequel la couche active d'électrode négative présente un degré d'alignement de la matière active d'électrode négative à base de carbone de 0,1 à 5,0 représenté par l'équation 1 suivante : [Equation 1] $O . I = \frac{{I}_{004}}{{I}_{110}}$ dans l'Équation 1,
I₀₀₄ représente l'aire du pic représentant la face cristalline (0,0,4) dans une mesure par spectroscopie de diffraction des rayons X (DRX) de la couche active d'électrode négative,
I₁₁₀ représente l'aire du pic représentant la face cristalline (1,1,0) dans une mesure de diffraction des rayons X (DRX) de la couche active d'électrode négative.

13. Électrode négative pour batterie secondaire au lithium comprenant :
un collecteur de courant d'électrode négative (C) ; et
une couche active d'électrode négative prévue sur au moins un côté du collecteur de courant d'électrode négative (C), et comprenant une matière active d'électrode négative à base de carbone,
dans laquelle, lors de la mesure des coordonnées de couleur de trois points quelconques inclus dans la surface unitaire, l'écart moyen de coordonnées de couleur entre chaque point satisfait à au moins deux conditions parmi ΔL* < 2,0, Δa* < 0,5 et Δb* < 0,5, dans laquelle l'écart moyen de coordonnées de couleur est mesuré comme exposé dans la description telle que déposée,
l'électrode négative étant fabriquée par le procédé de fabrication d'électrode négative selon la revendication 10.

14. L'électrode négative pour batterie secondaire au lithium selon la revendication 13, dans laquelle la couche active d'électrode négative présente un degré d'alignement de la matière active d'électrode négative à base de carbone de 0,1 à 5,0 représenté par l'équation 1 suivante : [Equation 1] $O . I = \frac{{I}_{004}}{{I}_{110}}$ dans l'Équation 1,
I₀₀₄ représente l'aire du pic représentant la face cristalline (0,0,4) dans une mesure par spectroscopie de diffraction des rayons X (DRX) de la couche active d'électrode négative,
I₁₁₀ représente l'aire du pic représentant la face cristalline (1,1,0) dans une mesure de diffraction des rayons X (DRX) de la couche active d'électrode négative.
